# EUROPEAN PATENT APPLICATION

(11) **EP 4 472 272 A1**
(43) Date of publication of application: **04.12.2024**
(21) Application number: 23746292.4
(22) Date of filing: 20.01.2023
(51) Int. Cl.: H04W 24/08

(54) **SYNCHRONIZATION SIGNAL BLOCK RECEIVING METHOD, SYNCHRONIZATION SIGNAL BLOCK SENDING METHOD, AND RELATED DEVICE**

(30) Priority: 27.01.2022 CN 202210102661
(71) Applicant: VIVO MOBILE COMMUNICATION CO., LTD., Dongguan, Guangdong 523863 (CN)
(72) Inventor: WANG, Lihui, Dongguan, Guangdong 523863 (CN); PAN, Xueming, Dongguan, Guangdong 523863 (CN); WU, Kai, Dongguan, Guangdong 523863 (CN)
(74) Representative: Conti, Marco
(86) International application number: PCT/CN2023/073274
(87) International publication number: WO 2023/143413

(57) **Abstract**

This application discloses a synchronization signal block receiving method, a synchronization signal block sending method, and a related device, and pertains to the field of communication technologies. The synchronization signal block receiving method according to embodiments of this application includes: acquiring, by a terminal, first information of a first synchronization signal block SSB from a network-side device; and receiving, by the terminal, the first SSB based on the first information. The first SSB is a non-cell-defining SSB. The first information includes at least one of the following: frequency domain start position, subcarrier spacing SCS, SSB index, SSB period, SSB transmission power, and physical cell identifier PCI.

## Description

### CROSS-REFERENCE TO RELATED APPLICATIONS

This application claims priority to Chinese Patent Application No. 202210102661.X filed in China on January 27, 2022, which is incorporated herein by reference in its entirety.

### TECHNICAL FIELD

This application pertains to the field of communication technologies and specifically relates to a method for receiving a synchronization signal block, a method for transmitting a synchronization signal block, and a related device.

### BACKGROUND

With the development of communication technologies, reduced capability (reduced capability, RedCap) terminals have appeared in communication systems. For RedCap terminals, since the bandwidth they support is less than or equal to the bandwidth capability of normal terminals, the bandwidth part (Bandwidth Part, BWP) configured by the network-side device for normal terminals may exceed the capability of RedCap terminals. Therefore, the network-side device can configure an additional first BWP for RedCap terminals, making the bandwidth of this first BWP within the capability range of RedCap UEs. Since this first BWP does not include a cell-defining synchronization signal block (Cell Defining Synchronization Signal and PBCH block, CD-SSB), paging monitoring is not considered on this first BWP but needs to switch to a second BWP that includes CD-SSB. This can lead to significant system signaling overhead and resource wastage.

### SUMMARY

Embodiments of this application provide a method for receiving a synchronization signal block, a method for transmitting a synchronization signal block, and a related device, able to solve the problem of significant system signaling overhead and resource wastage.

According to a first aspect, a method for receiving a synchronization signal block is provided, including:
acquiring, by a terminal, first information of a first synchronization signal block SSB from a network-side device; and
receiving, by the terminal, the first SSB based on the first information; where
the first SSB is a non-cell-defining SSB; and the first information includes at least one of the following: a frequency domain start position, a Subcarrier Spacing SCS, an SSB index, an SSB period, SSB transmission power, and a Physical Cell Identifier PCI.

According to a second aspect, a method for transmitting a synchronization signal block is provided, including:
transmitting, by a network-side device, first information of a first synchronization signal block SSB; and
transmitting, by the network-side device, the first SSB based on the first information; where
the first SSB is a non-cell-defining SSB; and the first information includes at least one of the following: a frequency domain start position, a Subcarrier Spacing SCS, an SSB index, an SSB period, SSB transmission power, and a Physical Cell Identifier PCI.

According to a third aspect, an apparatus for receiving a synchronization signal block is provided, including:
a first receiving module, configured to acquire first information of a first synchronization signal block SSB from a network-side device and receive the first SSB based on the first information; where
the first SSB is a non-cell-defining SSB; and the first information includes at least one of the following: a frequency domain start position, a Subcarrier Spacing SCS, an SSB index, an SSB period, SSB transmission power, and a Physical Cell Identifier PCI.

According to a fourth aspect, a synchronization signal block transmitting apparatus is provided, including:
a first transmitting module, configured to send first information of a first synchronization signal block SSB and send the first SSB based on the first information; where
the first SSB is a non-cell-defining SSB; and the first information includes at least one of the following: a frequency domain start position, a Subcarrier Spacing SCS, an SSB index, an SSB period, SSB transmission power, and a Physical Cell Identifier PCI.

According to a fifth aspect, a terminal is provided. The terminal includes a processor and a memory. The memory stores a program or instructions executable on the processor. When the program or instructions are executed by the processor, the steps of the method according to the first aspect are implemented.

According to a sixth aspect, a terminal is provided, including a processor and a communication interface, where the communication interface is configured to acquire first information of a first synchronization signal block SSB from a network-side device and receive the first SSB based on the first information; where the first SSB is a non-cell-defining SSB; and the first information includes at least one of the following: a frequency domain start position, a Subcarrier Spacing SCS, an SSB index, an SSB period, SSB transmission power, and a Physical Cell Identifier PCI.

According to a seventh aspect, a network-side device is provided. The network-side device includes a processor and a memory. The memory stores a program or instructions executable on the processor. When the program or instructions are executed by the processor, the steps of the method according to the second aspect are implemented.

According to an eighth aspect, a network-side device is provided, including a processor and a communication interface, where the communication interface is configured to send first information of a first synchronization signal block SSB and send the first SSB based on the first information; where
the first SSB is a non-cell-defining SSB; and the first information includes at least one of the following: a frequency domain start position, a Subcarrier Spacing SCS, an SSB index, an SSB period, SSB transmission power, and a Physical Cell Identifier PCI.

According to a ninth aspect, a communication system is provided, including a terminal and a network-side device. The terminal can be configured to execute the steps of the method for receiving a synchronization signal block according to the first aspect, and the network-side device can be configured to execute the steps of the method for transmitting a synchronization signal block according to the second aspect.

According to a tenth aspect, a readable storage medium is provided. The readable storage medium stores a program or instructions. When the program or instructions are executed by a processor, the steps of the method according to the first aspect are implemented, or the steps of the method according to the second aspect are implemented.

According to an eleventh aspect, a chip is provided. The chip includes a processor and a communication interface. The communication interface is coupled to the processor, and the processor is configured to run a program or instructions to implement the steps of the method according to the first aspect or the steps of the method according to the second aspect.

According to a thirteenth aspect, a computer program/program product is provided. The computer program/program product is stored in a storage medium, and the computer program/program product is executed by at least one processor to implement the steps of the method according to the first aspect or the steps of the method according to the second aspect.

In the embodiments of this application, the configuration of the first SSB is determined, providing support for RedCap terminals in a connected state to use the first SSB for radio resource management (Radio resource management, RRM) and radio link monitoring (Radio Link Monitoring, RLM), and providing support for RedCap terminals in idle/inactive states to use the first SSB for channel measurement and cell reselection. This allows RedCap terminals to avoid switching BWPs, thereby reducing the operational complexity of RedCap terminals and the overhead of signaling and resources.

### BRIEF DESCRIPTION OF DRAWINGS

FIG. 1 is a structural diagram of a network system to which the embodiments of this application are applicable;
FIG. 2 is a schematic flowchart of a method for receiving a synchronization signal block according to an embodiment of this application;
FIG. 3 is a schematic flowchart of a method for transmitting a synchronization signal block according to an embodiment of this application;
FIG. 4 is a structural diagram of an apparatus for receiving a synchronization signal block according to an embodiment of this application;
FIG. 5 is a structural diagram of an apparatus for transmitting a synchronization signal block according to an embodiment of this application;
FIG. 6 is a structural diagram of a communication device according to an embodiment of this application;
FIG. 7 is a structural diagram of a terminal according to an embodiment of this application; and
FIG. 8 is a structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that terms used in this way are interchangeable in appropriate circumstances such that the embodiments of this application can be implemented in other orders than the order illustrated or described herein. In addition, objects distinguished by "first" and "second" are generally of the same type, and the quantities of the objects are not limited, for example, there may be one or more first objects. In addition, "and/or" in the specification and claims represents at least one of the connected objects, and the character "/" generally indicates that the contextually associated objects have an "or" relationship.

It should be noted that technologies described in the embodiments of this application are not limited to long term evolution (Long Term Evolution, LTE) or LTE-Advanced (LTE-Advanced, LTE-A) systems, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for illustrative purposes, and NR terms are used in most of the following descriptions, although these technologies may also be applied to other applications than the NR system application, for example, to the 6th generation (6^{th} Generation, 6G) communication system.

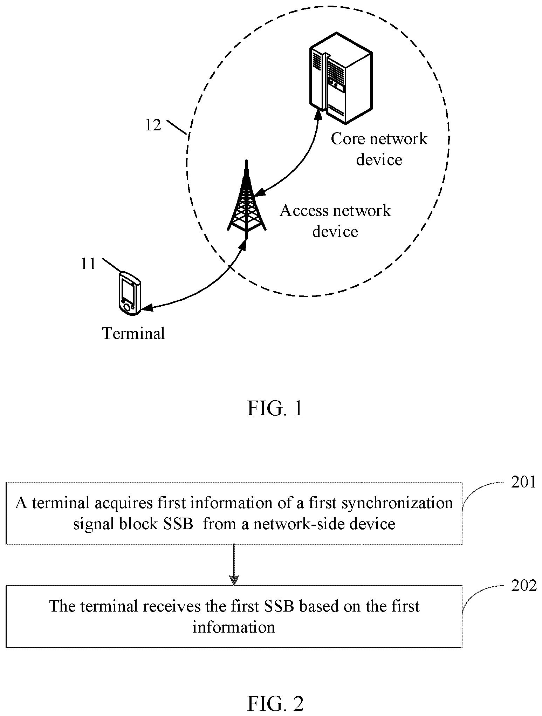

FIG. 1 is a block diagram of a wireless communication system to which the embodiments of this application are applicable. The wireless communication system includes a terminal 11 and a network-side device 12. The terminal 11 may be a mobile phone, tablet personal computer (Tablet Personal Computer), laptop computer (Laptop Computer) or notebook computer, personal digital assistant (Personal Digital Assistant, PDA), palmtop computer, netbook, ultra-mobile personal computer (ultra-mobile personal computer, UMPC), mobile internet device (Mobile Internet Device, MID), augmented reality (augmented reality, AR)/virtual reality (virtual reality, VR) device, robot, wearable device (Wearable Device, WD), vehicle user equipment (Vehicle User Equipment, VUE), pedestrian user equipment (Pedestrian User Equipment, PUE), smart home device (wireless communication-enabled home devices such as refrigerators, televisions, washing machines, or furniture), gaming console, personal computer (Personal Computer, PC), automated teller machine or self-service machine, or other terminal-side device. Wearable devices include smart watches, smart bands, smart earphones, smart glasses, smart jewelry (smart bangles, smart bracelets, smart rings, smart necklaces, smart foot bangles, and smart anklets), smart wristbands, and smart clothing. It should be noted that the specific type of the terminal 11 is not limited in the embodiments of this application. The network-side device 12 can include an access network device or core network device, where the access network device 12 can also be referred to as a radio access network device, radio access network (Radio Access Network, RAN), radio access network function, or radio access network unit. The access network device 12 can include base stations, wireless local area network (Wireless Local Area Networks, WLAN) access points, Wi-Fi nodes, or the like. The base station can be referred to as Node B, evolved Node B (Evolved Node, eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effect is achieved, the base station is not limited to any specific technical terminology. It should be noted that in the embodiments of this application, only the base station in the NR system is introduced as an example, and the specific type of the base station is not limited.

For ease of understanding, the following describes some concepts involved in the embodiments of this disclosure:

### I. Transmitting of synchronization signal block

In the design of the NR system, NR base stations need to send SSBs for terminals to perform synchronization, system information acquisition, measurement evaluation, and the like. An SSB consists of an NR synchronization signal (Synchronisation Signal, SS) and an NR physical broadcast channel (Physical broadcast channel, PBCH). The NR-SS is divided into an NR primary synchronization signal (Primary Synchronisation Signal, PSS) and an NR secondary synchronization signal (Secondary synchronization signal, SSS). The NR-PBCH is used for obtaining the system master information block (Master Information Block, MIB). The MIB further carries downlink (downlink, DL) baseband numerology information for indicating whether the numerology of the SSB is consistent with numerology for the remaining minimum system information (Remaining Minimum System Information, RMSI), the msg2/4 for initial access, and the broadcast open system interconnection (Open System Interconnection, OSI).

Multiple SSBs form an SS burst set (burst set). The maximum number of SSBs contained in an SS carrier burst set is related to the carrier frequency used by the network.

For frequencies below 3 GHz, an SS burst set can contain up to L = 4 SSBs.

For carrier frequencies ranging from 3 GHz to 6 GHz, an SS burst set can contain up to L = 8 SSBs.

For carrier frequencies above 6 GHz, an SS burst set can contain up to L = 64 SSBs.

Regardless of how many SSBs an SS burst set contains, these SSBs need to be transmitted within a 5ms transmission window.

NR supports different numerologies, and SSB symbols and other symbols (such as symbols for uplink control, downlink control, and guard intervals, and symbols for data transmission) may use different numerologies and be multiplexed (the other symbols mentioned later refer to other symbols multiplexed with SSBs in this context). The possible positions of SSBs within a slot under different numerologies may differ, and the positions of slots containing SSBs within the 5ms transmission window may also differ. Above 6 GHz, NR supports subcarrier spacings of 60 kHz, 120 kHz, and 240 kHz, while below 6 GHz, NR supports subcarrier spacings of 15 kHz, 30 kHz, and 60 kHz. SSBs can be transmitted with subcarrier spacings of 15 kHz, 30 kHz, 120 kHz, and 240 kHz. Other symbols can be transmitted with subcarrier spacings of 15 kHz, 30 kHz, 60 kHz, and 120 kHz. The subcarrier spacing of 240 kHz cannot be used for data transmission. Regardless of the numerology of the SSB, the numerology of the RMSI control resource set (Control resource set, CORESET) needs to be consistent with the numerology of the RMSI.

The SSB transmission occasions specified in the NR protocol are as follows:
For an SSB transmitted within a half-frame, the symbol index of the first OFDM symbol of the SSB block is related to the subcarrier spacing of the SSB. Here, the orthogonal frequency division multiplex (Orthogonal frequency division multiplex, OFDM) symbol numbered 0 is the first OFDM symbol of the first slot in the 5ms half-frame.

Case 1: With a 15 kHz subcarrier spacing, the symbol number of the first OFDM symbol transmitting the SSB is {2, 8} + 14*n. When the carrier frequency is less than or equal to 3 GHz, n = 0, 1. When the carrier frequency is greater than 3 GHz and less than or equal to 6 GHz, n = 0, 1, 2, 3.

Case 2: With a 30 kHz subcarrier spacing, the symbol number of the first OFDM symbol transmitting the SSB is {4, 8, 16, 20} + 28 * n. When the carrier frequency is less than or equal to 3 GHz, n = 0. When the carrier frequency is greater than 3 GHz and less than or equal to 6 GHz, n = 0, 1.

Case 3: With a 30 kHz subcarrier spacing, the symbol number of the first OFDM symbol transmitting the SSB is {2, 8} + 14 * n. When the carrier frequency is less than or equal to 3 GHz, n = 0, 1. When the carrier frequency is greater than 3 GHz and less than or equal to 6 GHz, n = 0, 1, 2, 3.

Case 4: With a 120 kHz subcarrier spacing, the symbol number of the first OFDM symbol transmitting the SSB is {4, 8, 16, 20} + 28 * n. When the carrier frequency is greater than 6 GHz, n = 0, 1, 2, 3, 5, 6, 7, 8, 10, 11, 12, 13, 15, 16, 17, 18.

### II. Transmitting and receiving of system information

The transmitting of system information is associated with the transmitting of the synchronization signal block. In the PBCH within the synchronization signal block, parameters for monitoring the physical downlink control channel (Physical downlink control channel, PDCCH) that schedules SIB-1 are indicated. One way of associating the monitoring occasions (monitoring occasion) for this PDCCH with the SSB is as follows: the monitoring occasions for the PDCCH scheduling SIB-1 associated with each SSB is the PDCCH monitoring occasions in two consecutive slots. The UE determines the associated monitoring occasions for the PDCCH scheduling SIB-1 based on the index of the SSB and monitors for the PDCCH. The PDCCH and the associated synchronization signal block are quasi-co-located. Here, SIB refers to the system information block (System Information Block).

### III. Transmitting of paging channel

The UE determines the occasion for paging (paging) monitoring (paging occasion, PO) based on the UE identifier (UE-ID) and the discontinuous reception (Discontinuous Reception, DRX) cycle in idle state. One PO contains multiple paging PDCCH monitoring occasions. The N PDCCH occasions within the PO and N SSBs transmitted by the network-side device correspond one-to-one in time order. The N SSBs are the N SSBs configured and transmitted by the network through higher-layer signaling. The n-th (1 ≤ n ≤ N) paging PDCCH monitoring occasion and the corresponding n-th SSB are quasi-co-located (quasi co-located, QCL).

That is, the paging signal is also transmitted through beam sweeping, and the beam used for transmitting the paging PDCCH and paging PDSCH is the same as the beam used for transmitting the corresponding SSB.

### IV RedCap UE

For RedCap UE, since the supported bandwidth is less than or equal to the bandwidth capability of normal UEs. The BWP bandwidth configured by the network-side device for normal UEs may exceed the capability of RedCap terminals, so the network can configure an additional BWP for RedCap terminals, making the bandwidth of this BWP within the capability range of RedCap UEs.

Moreover, since the number of receiving antennas of RedCap UEs is less than that of normal UEs, their receiving performance is not as good as that of normal UEs, leading to the network-side device possibly using greater overhead and more resources for transmitting to RedCap UEs. Even if the BWP bandwidth configured by the network-side is within the capability range of RedCap UEs, if the network uses the same BWP for transmitting to both normal UEs and RedCap UEs, the load on that BWP may be too high, potentially causing congestion in the transmission to normal terminals. Therefore, the current Work Item (Work Item) has concluded the following:

The network-side device can configure a separate initial DL BWP (that is, a first initial BWP) for RedCap terminals. In a case that this first initial BWP does not include CD-SSB (that is, a second SSB) or the entire control resource set with an index of 0 (CORESET#0), then:
if the first initial BWP is configured with a search space for random access operations, that is, type 1 common search space (Type 1 Common Search Space, Type 1 CSS), but is not configured with any search space related to paging, the first initial BWP can exclude SSB, CORESET#0, and SIB.

RedCap UEs in radio resource control idle (Radio Resource Control IDLE, RRC_IDLE) and RRC_INACTIVE (RRC_INACTIVE) states need to monitor for paging messages on the initial BWP associated with the second SSB (that is, a second initial BWP). It is not further considered that RedCap UEs in RRC_IDLE and RRC INACTIVE states monitor for paging on the first initial BWP associated with the first SSB. The first SSB can be understood as a non-cell-defining SSB (Non Cell Defining SSB, NCD-SSB).

For the downlink active BWP (hereinafter referred to as the first BWP) configured for RRC_CONNECTED (RRC_CONNECTED) RedCap UEs, if it does not include the second SSB or the entire CORESET#0, then:
RedCap UEs that only support the mandatory feature 6-1 (FG 6-1) and do not support the optional feature 6-1a (FG 6-1a) expect it to contain the first SSB for the serving cell, but not CORESET#0 or SIB.

The aforementioned first BWP can be the first initial BWP for UEs in RRC_IDLE/INACTIVE/CONNECTED states, or any active (Active) BWP for UEs in the RRC_CONNECTED state.

Optionally, the period of the first SSB does not need to be configured the same as that of the second SSB, and the period of the first SSB should not be less than the period of the second SSB.

Currently, the configuration signaling for the first SSB and the method for the network to provide the availability (availability) of the first SSB to RedCap UEs in RRC_IDLE and RRC INACTIVE states have not been defined.

The following describes in detail the method for receiving a synchronization signal block provided in the embodiments of this application through some embodiments and application scenarios thereof with reference to the accompanying drawings.

Referring to FIG. 2, an embodiment of this application provides a method for receiving a synchronization signal block including the following steps.

Step 201. A terminal acquires first information of a first synchronization signal block SSB from a network-side device.

Step 202. The terminal receives the first SSB based on the first information.

The first SSB is a non-cell-defining SSB; and the first information includes at least one of the following: a frequency domain start position, a subcarrier spacing (Subcarrier Spacing, SCS), an SSB index, an SSB period, SSB transmission power, and a physical cell identifier (Physical Cell identifier, PCI).

In this embodiment, the terminal can be a RedCap terminal. The first information can be understood as part of the configuration information of the first SSB. In cases where the first information does not include at least one of the parameters of the SCS, SSB index, SSB period, SSB transmission power, and PCI of the first SSB, the terminal can default that at least one of these parameters is the same as the corresponding parameter in the second SSB. For example, when the first information includes a frequency domain start position, a subcarrier spacing (Subcarrier Spacing, SCS), an SSB index, an SSB period, and SSB transmission power, the terminal can assume, determine, or consider that the PCI of the first SSB is the same as the PCI of the second SSB.

In this embodiment of this application, the configuration of the first SSB is determined, providing support for RedCap terminals in a connected state to use the first SSB for radio resource management (Radio resource management, RRM) and radio link monitoring (Radio Link Monitoring, RLM), and providing support for RedCap terminals in idle/inactive states to use the first SSB for channel measurement and cell reselection. This allows RedCap terminals to avoid switching BWPs, thereby reducing the operational complexity of RedCap terminals and the overhead of signaling and resources.

Optionally, in some embodiments, the frequency domain start position is configured based on an absolute frequency domain position or a frequency offset parameter.

For example, in some embodiments, the absolute frequency domain position can be configured based on parameters such as ssbFrequency or absoluteFrequencySSB. This absolute frequency domain position can be referred to as absolute radio-frequency channel number (Absolute Radio-Frequency Channel Number, ARFCN). It should be understood that the aforementioned frequency offset parameter can be used to indicate an offset value. For example, the frequency domain start position can be determined based on this offset value and a frequency offset reference position agreed upon in the protocol.

Optionally, in some embodiments, the frequency domain start position is determined based on a frequency offset reference position, and the frequency offset reference position includes at least one of the following:
a start position of a first bandwidth part BWP, an end position of the first BWP, a start position of a second BWP, an end position of the second BWP, a start position of a second SSB, an end position of the second SSB, a start position of a control resource set with an index of 0, an end position of the control resource set with the index of 0, a start position of a first control resource set, an end position of the first control resource set, a reference point A, a start position of a serving cell, and an end position of the serving cell.

The first control resource set is a control resource set with a smallest index or largest index on the first BWP, the first BWP is at least one of an initial BWP of the terminal and an active BWP of the terminal, the initial BWP is independent of the second BWP, the second BWP contains the second SSB, and the second SSB is a cell-defining SSB.

In some embodiments, the first control resource set is associated with at least one of the following:
Type 1 common search space CSS;
Type 2 or Type 2A CSS; and
Type 0 or Type 0A CSS.

It should be understood that in the embodiments of this application, the aforementioned first BWP can be understood as the first initial BWP for RRC_IDLE, INACTIVE, or CONNECTED terminals, or an active BWP for any terminals in the RRC_CONNECTED state.

Optionally, the SSB index can be configured based on parameters such as SSB-Index and/or ssb-PositionsInBurst.

Optionally, in some embodiments, the first information is contained in at least one of the following signaling:
BWP common downlink signaling (BWP-DownlinkCommon);
BWP dedicated downlink signaling (BWP-DownlinkDedicated);
system information block frequency information downlink signaling (FrequencyInfoDL-SIB);
frequency information downlink signaling (FrequencyInfoDL);
serving cell common configuration signaling (ServingCellConfigCommon); and
serving cell configuration signaling (ServingCellConfig).

Optionally, the first signaling carrying the first information includes at least one of the following:
terminal-specific signaling, cell-specific signaling, and system information.

Optionally, the configuration information of the first SSB includes the first information and may also include second information. In some embodiments, the second information of the first SSB is carried by second signaling, and the second signaling comprises at least one of: system information, a first object, terminal-specific radio resource control RRC signaling, and an RRC connection release message.

The first object is downlink physical layer signaling or Layer 1 signaling.

For example, the network-side device can send the second information of the first SSB through downlink control information DCI or the physical downlink shared channel (Physical downlink shared channel, PDSCH).

Optionally, the aforementioned DCI can be DCI carrying paging early indication (paging early indication, PEI) or DCI scheduling paging.

Optionally, the aforementioned PDSCH is preferably a PDSCH scheduled by DCI scheduling paging.

Optionally, in some embodiments, in a case that the terminal has received second information carried by the first object and second information carried by a second object, the terminal determines the second information of the first SSB based on the first object and the second object.

The second object includes at least one of the system information, the terminal-specific RRC signaling, and the RRC connection release message.

In the embodiments of this application, the second information of the first object can overwrite the second information in the second object. For example, when the second information of the first object includes all parameter configurations of the second information in the second object, the second information of the first object can be directly determined as the second information of the first SSB; and when the second information of the first object includes part of the parameter configurations of the second information in the second object, this part of parameters can be directly updated based on the second information of the first object for the second information in the second object.

For example, when the second information of the first object includes A1, B 1, C1, and D, and the second information of the second object includes A2, B2, and C2, A1, B1, C1, and D can be determined as the second information of the first SSB.

For another example, when the second information of the first object includes A1, B1, and C1, and the second information of the second object includes A2, B2, C2, and E, A1, B 1, C1, and E can be determined as the second information of the first SSB.

For yet another example, when the second information of the first object includes A1, B1, C1, and D, and the second information of the second object includes A2, B2, C2, and E, A1, B 1, C1, D, and E can be determined as the second information of the first SSB.

Optionally, in some embodiments, the second information of the first SSB includes at least one of the following:
availability information;
unavailability information;
change information, where the change information indicates changing at least one of the availability information and/or the unavailability information in the second information carried by the second signaling received last time; and
no-change information, where the no-change information indicates not changing at least one of the availability information and/or the unavailability information in the second information carried by the second signaling received last time.

In the embodiments of this application, the availability information may include at least one of the following:
the terminal considering or expecting that the network-side device has transmitted the first SSB;
a first duration of availability, where the first duration is used for determining a time length of validity period of the second information; and
a first reference point of availability, where the first duration is used for determining a start time instant of the validity period of the second information.

It should be understood that when the availability information includes a first duration of availability, the time length of the validity period of the second information equals the first duration.

Optionally, the time length of the validity period of the second information satisfies at least one of the following conditions:
the validity period of the second information is configured by a higher layer;
the validity period of the second information is predefined or preconfigured;
the validity period of the second information is indicated by target indication information; and
an end time instant of the validity period of the second information is dependent on reception of next target indication information by the terminal; where
the target indication information indicates the second information.

The end time instant of the validity period of the second information being dependent on reception of next target indication information by the terminal can be understood as, upon receiving target indication information, the second information carried by that target indication information takes immediate effect until the next target indication information is received. It can also be understood as, upon receiving target indication information, the second information carried by that target indication information takes effect at a start time instant specified by a higher layer configuration, protocol agreement, or indicated by the target indication information, until the next target indication information is received.

Optionally, the start time instant of the validity period of the second information includes one of the following:
a first time instant at which the target indication information is received or at which a next time unit after the target indication information is received starts;
a start time instant of a target SSB period, where the target SSB period is associated with the received target indication information;
a time position configured by a higher layer; and
a first reference point indicated by the target indication information; where
the target indication information indicates the second information.

In the embodiments of this application, the aforementioned time unit can be a subframe, slot, symbol, or the like, without further limitation.

Optionally, in some embodiments, the unavailability information includes at least one of the following:
the terminal not considering or expecting that the network-side device has transmitted the first SSB;
a second duration of unavailability; and
a second reference point of unavailability.

It should be understood that the aforementioned change information can be understood as changing the availability information in the second information carried by the second signaling received last time to unavailability information, or changing the unavailability information in the second information carried by the second signaling received last time to availability information. For example, the current Layer 1 signaling indication is changing from "available" indicated by the last Layer 1 signaling to "unavailable" or from "unavailable" indicated by the last Layer 1 signaling to "available".

The aforementioned no-change information can be understood as keeping the availability information in the second information carried by the second signaling received last time unchanged or keeping the unavailability information in the second information carried by the second signaling received last time unchanged. For example, the current Layer 1 signaling indication is "available" as indicated by the last Layer 1 signaling is kept unchanged, still "available", or "unavailable" as indicated by the last Layer 1 signaling is kept unchanged, still "unavailable".

Optionally, in some embodiments, after the terminal has received the first SSB based on the first information, the method further includes:
determining, by the terminal in a case that no target indication is received by the terminal, whether the first SSB is available or unavailable.

In the embodiments of this application, it is assumed that the terminal has received the first information of the first SSB, but the indication of the second information of the first SSB has not been configured for the terminal or the terminal has not detected the second information, and then the terminal defaults the first SSB as available or unavailable.

Optionally, in some embodiments, the method further includes:
expecting, by the terminal in a case that the terminal is to monitor for a paging or a paging early indication on a first BWP, to receive at least one of the first information of the first SSB and the second information of the first SSB, where the first BWP is at least one of an initial BWP of the terminal and an active BWP of the terminal, the initial BWP is independent of a second BWP, and the second BWP contains a cell-defining SSB.

In the embodiments of this application, the aforementioned terminal can be a terminal in the RRC_IDLE state or RRC INACTIVE state.

Optionally, in some embodiments, the method further includes:
transmitting, by the terminal, a first request to the network-side device based on a first uplink resource, where the first request is used to request the network-side device to send the first SSB on the first BWP, the first BWP is at least one of an initial BWP of the terminal and an active BWP of the terminal, the initial BWP is independent of a second BWP, and the second BWP contains a cell-defining SSB.

In the embodiments of this application, the aforementioned first uplink resource includes any one of the following:
a physical random access channel resource, a resource corresponding to message 3, a resource corresponding to message A, and a granted physical uplink shared channel resource that is semi-persistently configured.

The messages 3 and A can be understood as messages in a random access procedure.

It should be understood that when the first uplink resource is a physical random access channel resource, the response information to the first request can be message 2; when the first uplink resource is a resource corresponding to message 3, the response information to the first request can be message 4; and when the first uplink resource is a resource corresponding to message A, the response information to the first request can be message B.

In the embodiments of this application, the response information to the first request includes at least one of the first information and the second information of the first SSB.

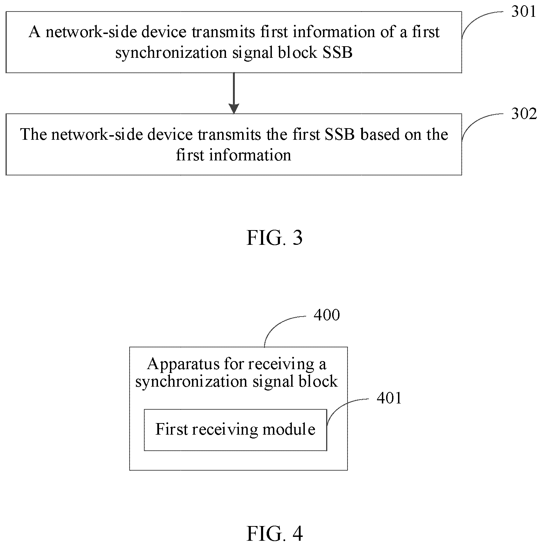

Referring to FIG. 3, an embodiment of this application further provides a method for transmitting a synchronization signal block including the following steps.

Step 301. A network-side device sends first information of a first synchronization signal block SSB.

Step 302. The network-side device sends the first SSB based on the first information.

The first SSB is a non-cell-defining SSB; and the first information includes at least one of the following: a frequency domain start position, a Subcarrier Spacing SCS, an SSB index, an SSB period, SSB transmission power, and a Physical Cell Identifier PCI.

Optionally, the frequency domain start position is configured based on an absolute frequency domain position or a frequency offset parameter.

Optionally, the frequency domain start position is determined based on a frequency offset reference position, and the frequency offset reference position includes at least one of the following:
a start position of a first bandwidth part BWP, an end position of the first BWP, a start position of a second BWP, an end position of the second BWP, a start position of a second SSB, an end position of the second SSB, a start position of a control resource set with an index of 0, an end position of the control resource set with the index of 0, a start position of a first control resource set, an end position of the first control resource set, a reference point A, a start position of a serving cell, and an end position of the serving cell.

The first control resource set is a control resource set with a smallest index or largest index on the first BWP, the first BWP is at least one of an initial BWP of the terminal and an active BWP of the terminal, the initial BWP is independent of the second BWP, the second BWP contains the second SSB, and the second SSB is a cell-defining SSB.

Optionally, the first control resource set is associated with at least one of the following:
Type 1 common search space CSS;
Type 2 or Type 2A CSS; and
Type 0 or Type 0A CSS.

Optionally, the first information is contained in at least one of the following signaling:
BWP common downlink signaling;
BWP dedicated downlink signaling;
system information block frequency information downlink signaling;
frequency information downlink signaling;
serving cell common configuration signaling; and
serving cell configuration signaling.

Optionally, the first signaling carrying the first information includes at least one of the following:
terminal-specific signaling, cell-specific signaling, and system information.

Optionally, the second information of the first SSB is carried by second signaling, and the second signaling comprises at least one of: system information, a first object, terminal-specific radio resource control RRC signaling, and an RRC connection release message.

The first object is downlink physical layer signaling or Layer 1 signaling.

Optionally, the second information of the first SSB includes at least one of the following:
availability information;
unavailability information;
change information, where the change information indicates changing at least one of the availability information and/or the unavailability information in the second information carried by the second signaling received last time; and
no-change information, where the no-change information indicates not changing at least one of the availability information and/or the unavailability information in the second information carried by the second signaling received last time.

Optionally, the availability information includes at least one of the following:
the terminal considering or expecting that the network-side device has transmitted the first SSB;
a first duration of availability, where the first duration is used for determining a time length of validity period of the second information; and
a first reference point of availability, where the first duration is used for determining a start time instant of the validity period of the second information.

Optionally, the time length of the validity period of the second information satisfies at least one of the following conditions:
the validity period of the second information is configured by a higher layer;
the validity period of the second information is predefined or preconfigured;
the validity period of the second information is indicated by target indication information; and
an end time instant of the validity period of the second information is dependent on reception of next target indication information by the terminal; where
the target indication information indicates the second information.

Optionally, the start time instant of the validity period of the second information includes one of the following:
a first time instant at which the target indication information is received or at which a next time unit after the target indication information is received starts;
a start time instant of a target SSB period, where the target SSB period is associated with the received target indication information;
a time position configured by a higher layer; and
a first reference point indicated by the target indication information; where
the target indication information indicates the second information.

Optionally, the unavailability information includes at least one of the following:
the terminal not considering or expecting that the network-side device has transmitted the first SSB;
a second duration of unavailability; and
a second reference point of unavailability.

Optionally, the method further includes:
receiving, by the network-side device based on a first uplink resource, a first request transmitted by the terminal, where the first request is used to request the network-side device to send the first SSB on the first BWP, the first BWP is at least one of an initial BWP of the terminal and an active BWP of the terminal, the initial BWP is independent of a second BWP, and the second BWP contains a cell-defining SSB.

Optionally, the first uplink resource includes any one of the following:
a physical random access channel resource, a resource corresponding to message 3, a resource corresponding to message A, and a granted physical uplink shared channel resource that is semi-persistently configured.

Optionally, the response information to the first request includes at least one of the first information and the second information of the first SSB.

In this embodiment of this application, the configuration of the first SSB is determined, providing support for RedCap terminals in a connected state to use the first SSB for radio resource management (Radio resource management, RRM) and radio link monitoring (Radio Link Monitoring, RLM), and providing support for RedCap terminals in idle/inactive states to use the first SSB for channel measurement and cell reselection. This allows RedCap terminals to avoid switching BWPs, thereby reducing the operational complexity of RedCap terminals and the overhead of signaling and resources.

The method for receiving a synchronization signal block provided in the embodiments of this application may be executed by an apparatus for receiving a synchronization signal block. In the embodiments of this application, an apparatus for receiving a synchronization signal block executing the method for receiving a synchronization signal block is used as an example to illustrate the apparatus for receiving a synchronization signal block provided in the embodiments of this application.

Referring to FIG. 4, an embodiment of this application further provides an apparatus for receiving a synchronization signal block 400, including:
a first receiving module 401, configured to acquire first information of a first synchronization signal block SSB from a network-side device and receive the first SSB based on the first information; where
the first SSB is a non-cell-defining SSB; and the first information includes at least one of the following: a frequency domain start position, a Subcarrier Spacing SCS, an SSB index, an SSB period, SSB transmission power, and a Physical Cell Identifier PCI.

Optionally, the frequency domain start position is configured based on an absolute frequency domain position or a frequency offset parameter.

Optionally, the frequency domain start position is determined based on a frequency offset reference position, and the frequency offset reference position includes at least one of the following:
a start position of a first bandwidth part BWP, an end position of the first BWP, a start position of a second BWP, an end position of the second BWP, a start position of a second SSB, an end position of the second SSB, a start position of a control resource set with an index of 0, an end position of the control resource set with the index of 0, a start position of a first control resource set, an end position of the first control resource set, a reference point A, a start position of a serving cell, and an end position of the serving cell.

The first control resource set is a control resource set with a smallest index or largest index on the first BWP, the first BWP is at least one of an initial BWP of the terminal and an active BWP of the terminal, the initial BWP is independent of the second BWP, the second BWP contains the second SSB, and the second SSB is a cell-defining SSB.

Optionally, the first control resource set is associated with at least one of the following:
Type 1 common search space CSS;
Type 2 or Type 2A CSS; and
Type 0 or Type 0A CSS.

Optionally, the first information is contained in at least one of the following signaling:
BWP common downlink signaling;
BWP dedicated downlink signaling;
system information block frequency information downlink signaling;
frequency information downlink signaling;
serving cell common configuration signaling; and
serving cell configuration signaling.

Optionally, the first signaling carrying the first information includes at least one of the following:
terminal-specific signaling, cell-specific signaling, and system information.

Optionally, the second information of the first SSB is carried by second signaling, and the second signaling comprises at least one of: system information, a first object, terminal-specific radio resource control RRC signaling, and an RRC connection release message.

The first object is downlink physical layer signaling or Layer 1 signaling.

Optionally, the apparatus 400 for receiving a synchronization signal block further includes:
a determination module, configured to: determine, in a case that the terminal has received second information carried by the first object and second information carried by a second object, the second information of the first SSB based on the first object and the second object.

The second object includes at least one of the system information, the terminal-specific RRC signaling, and the RRC connection release message.

Optionally, the second information of the first SSB includes at least one of the following:
availability information;
unavailability information;
change information, where the change information indicates changing at least one of the availability information and/or the unavailability information in the second information carried by the second signaling received last time; and
no-change information, where the no-change information indicates not changing at least one of the availability information and/or the unavailability information in the second information carried by the second signaling received last time.

Optionally, the availability information includes at least one of the following:
the terminal considering or expecting that the network-side device has transmitted the first SSB;
a first duration of availability, where the first duration is used for determining a time length of validity period of the second information; and
a first reference point of availability, where the first duration is used for determining a start time instant of the validity period of the second information.

Optionally, the time length of the validity period of the second information satisfies at least one of the following conditions:
the validity period of the second information is configured by a higher layer;
the validity period of the second information is predefined or preconfigured;
the validity period of the second information is indicated by target indication information; and
an end time instant of the validity period of the second information is dependent on reception of next target indication information by the terminal; where
the target indication information indicates the second information.

Optionally, the start time instant of the validity period of the second information includes one of the following:
a first time instant at which the target indication information is received or at which a next time unit after the target indication information is received starts;
a start time instant of a target SSB period, where the target SSB period is associated with the received target indication information;
a time position configured by a higher layer; and
a first reference point indicated by the target indication information; where
the target indication information indicates the second information.

Optionally, the unavailability information includes at least one of the following:
the terminal not considering or expecting that the network-side device has transmitted the first SSB;
a second duration of unavailability; and
a second reference point of unavailability.

Optionally, the apparatus 400 for receiving asynchronization signal block further includes:
the determination module, configured to: determine, in a case that no target indication is received by the terminal, whether the first SSB is available or unavailable.

Optionally, the apparatus 400 for receiving asynchronization signal block further includes:
a processing module, configured to expect, in a case that the terminal is to monitor for a paging or a paging early indication on a first BWP, to receive at least one of the first information of the first SSB and the second information of the first SSB, where the first BWP is at least one of an initial BWP of the terminal and an active BWP of the terminal, the initial BWP is independent of a second BWP, and the second BWP contains a cell-defining SSB.

Optionally, the apparatus 400 for receiving a synchronization signal block further includes:
a second transmitting module, configured to send a first request to the network-side device based on a first uplink resource, where the first request is used to request the network-side device to send the first SSB on the first BWP, the first BWP is at least one of an initial BWP of the terminal and an active BWP of the terminal, the initial BWP is independent of a second BWP, and the second BWP contains a cell-defining SSB.

Optionally, the first uplink resource includes any one of the following:
a physical random access channel resource, a resource corresponding to message 3, a resource corresponding to message A, and a granted physical uplink shared channel resource that is semi-persistently configured.

Optionally, the response information to the first request includes at least one of the first information and the second information of the first SSB.

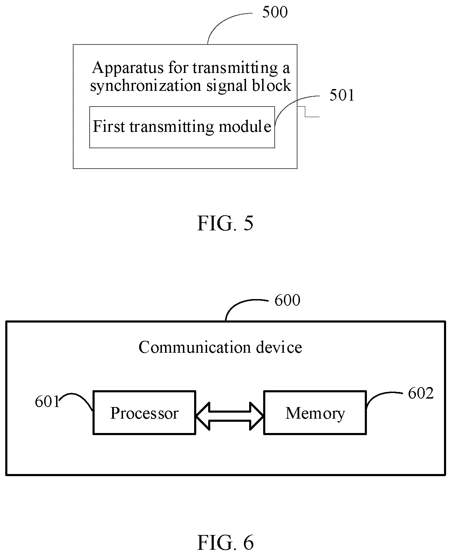

Referring to FIG. 5, an embodiment of this application further provides a synchronization signal block transmitting apparatus 500, including:
a first transmitting module 501, configured to send first information of a first synchronization signal block SSB and send the first SSB based on the first information; where
the first SSB is a non-cell-defining SSB; and the first information includes at least one of the following: a frequency domain start position, a Subcarrier Spacing SCS, an SSB index, an SSB period, SSB transmission power, and a Physical Cell Identifier PCI.

Optionally, the frequency domain start position is configured based on an absolute frequency domain position or a frequency offset parameter.

Optionally, the frequency domain start position is determined based on a frequency offset reference position, and the frequency offset reference position includes at least one of the following:
a start position of a first bandwidth part BWP, an end position of the first BWP, a start position of a second BWP, an end position of the second BWP, a start position of a second SSB, an end position of the second SSB, a start position of a control resource set with an index of 0, an end position of the control resource set with the index of 0, a start position of a first control resource set, an end position of the first control resource set, a reference point A, a start position of a serving cell, and an end position of the serving cell.

The first control resource set is a control resource set with a smallest index or largest index on the first BWP, the first BWP is at least one of an initial BWP of the terminal and an active BWP of the terminal, the initial BWP is independent of the second BWP, the second BWP contains the second SSB, and the second SSB is a cell-defining SSB.

Optionally, the first control resource set is associated with at least one of the following:
Type 1 common search space CSS;
Type 2 or Type 2A CSS; and
Type 0 or Type 0A CSS.

Optionally, the first information is contained in at least one of the following signaling:
BWP common downlink signaling;
BWP dedicated downlink signaling;
system information block frequency information downlink signaling;
frequency information downlink signaling;
serving cell common configuration signaling; and
serving cell configuration signaling.

Optionally, the first signaling carrying the first information includes at least one of the following:
terminal-specific signaling, cell-specific signaling, and system information.

Optionally, the second information of the first SSB is carried by second signaling, and the second signaling comprises at least one of: system information, a first object, terminal-specific radio resource control RRC signaling, and an RRC connection release message.

The first object is downlink physical layer signaling or Layer 1 signaling.

Optionally, the second information of the first SSB includes at least one of the following:
availability information;
unavailability information;
change information, where the change information indicates changing at least one of the availability information and/or the unavailability information in the second information carried by the second signaling received last time; and
no-change information, where the no-change information indicates not changing at least one of the availability information and/or the unavailability information in the second information carried by the second signaling received last time.

Optionally, the availability information includes at least one of the following:
the terminal considering or expecting that the network-side device has transmitted the first SSB;
a first duration of availability, where the first duration is used for determining a time length of validity period of the second information; and
a first reference point of availability, where the first duration is used for determining a start time instant of the validity period of the second information.

Optionally, the time length of the validity period of the second information satisfies at least one of the following conditions:
the validity period of the second information is configured by a higher layer;
the validity period of the second information is predefined or preconfigured;

the validity period of the second information is indicated by target indication information; and
an end time instant of the validity period of the second information is dependent on reception of next target indication information by the terminal; where
the target indication information indicates the second information.

Optionally, the start time instant of the validity period of the second information includes one of the following:
a first time instant at which the target indication information is received or at which a next time unit after the target indication information is received starts;
a start time instant of a target SSB period, where the target SSB period is associated with the received target indication information;
a time position configured by a higher layer; and
a first reference point indicated by the target indication information; where
the target indication information indicates the second information.

Optionally, the unavailability information includes at least one of the following:
the terminal not considering or expecting that the network-side device has transmitted the first SSB;
a second duration of unavailability; and
a second reference point of unavailability.

Optionally, the apparatus 500 for transmitting a synchronization signal block further includes:
a second receiving module, configured to receive, based on a first uplink resource, a first request transmitted by the terminal, where the first request is used to request the network-side device to send the first SSB on the first BWP, the first BWP is at least one of an initial BWP of the terminal and an active BWP of the terminal, the initial BWP is independent of a second BWP, and the second BWP contains a cell-defining SSB.

Optionally, the first uplink resource includes any one of the following:
a physical random access channel resource, a resource corresponding to message 3, a resource corresponding to message A, and a granted physical uplink shared channel resource that is semi-persistently configured.

Optionally, the response information to the first request includes at least one of the first information and the second information of the first SSB.

The apparatus for receiving a synchronization signal block and the apparatus for transmitting a synchronization signal block in the embodiments of this application may be an electronic device, for example, an electronic device having an operating system, or they may be a component of an electronic device, for example, an integrated circuit or a chip. The electronic device may be a terminal or other devices than terminals. For example, the terminal may include but is not limited to the types of the terminal 11 listed above, and the other devices may be servers, network attached storage (Network Attached Storage, NAS), or the like, which are not specifically limited in the embodiments of this application.

The apparatus for receiving a synchronization signal block and the apparatus for transmitting a synchronization signal block in the embodiments of this application can implement processes implemented in the method embodiments of FIG. 2 and FIG. 3, achieving the same technical effects. To avoid repetition, details are not described herein again.

Optionally, as shown in FIG. 6, an embodiment of this application further provides a communication device 600 including a processor 601 and a memory 602. The memory 602 stores a program or instructions executable on the processor 601. For example, when the communication device 600 is a terminal, when the program or instructions are executed by the processor 601, the steps of the foregoing embodiment of the method for receiving a synchronization signal block are implemented, with the same technical effects achieved. To avoid repetition, details are not described herein again. When the communication device 600 is a network-side device, the program or instructions are executed by the processor 601 to implement the processes in the foregoing embodiment of the method for transmitting a synchronization signal block, with the same technical effects achieved. To avoid repetition, details are not described herein again.

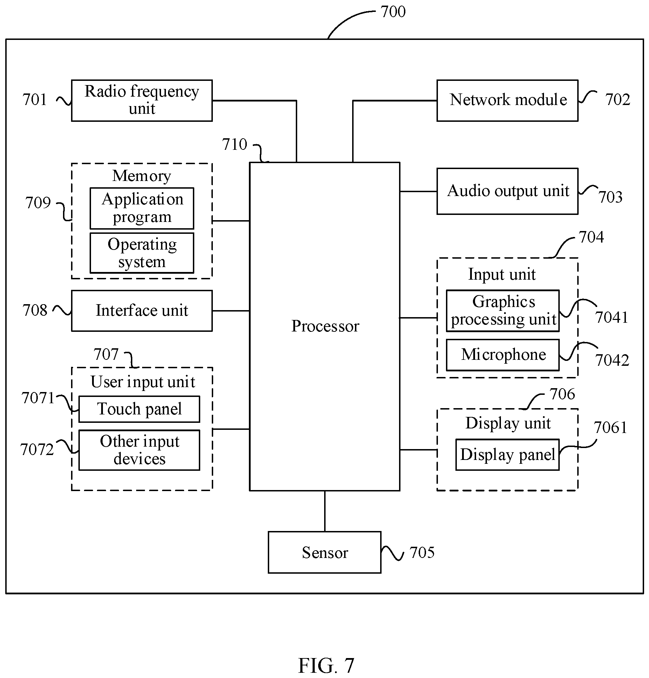

An embodiment of this application further provides a terminal including a processor and a communication interface. The communication interface is configured to acquire first information of a first synchronization signal block SSB from a network-side device and receive the first SSB based on the first information. The first SSB is a non-cell-defining SSB; and the first information includes at least one of the following: a frequency domain start position, a Subcarrier Spacing SCS, an SSB index, an SSB period, SSB transmission power, and a physical cell identifier PCI. This terminal embodiment corresponds to the foregoing method embodiment on the terminal side. All processes and implementations in the foregoing method embodiment are applicable to this terminal embodiment, achieving the same technical effect. Specifically, FIG. 7 is a schematic diagram of a hardware structure of a terminal implementing the embodiments of this application.

The terminal 700 includes but is not limited to at least part of these components: a radio frequency unit 701, a network module 702, an audio output unit 703, an input unit 704, a sensor 705, a display unit 706, a user input unit 707, an interface unit 708, a memory 709, a processor 710, and the like.

It can be understood by those skilled in the art that the terminal 700 may further include a power supply (for example, battery) supplying power to the components. The power supply may be logically connected to the processor 710 via a power management system, so that functions such as charge management, discharge management, and power consumption management are implemented via the power management system. The structure of the terminal shown in FIG. 7 does not constitute any limitation on the terminal, and the terminal may include more or fewer components than shown in the figure, or combine some of the components, or have different arrangements of the components. Details are not described herein.

It should be understood that in an embodiment of this application, the input unit 704 may include a graphics processing unit (Graphics Processing Unit, GPU) 7041 and a microphone 7042. The graphics processing unit 7041 processes image data of a static picture or video obtained by an image capture apparatus (such as a camera) in an image capture or video capture mode. The display unit 706 may include a display panel 7061. The display panel 7061 may be configured in a form of a liquid crystal display, an organic light-emitting diode display, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. Specifically, the other input devices 7072 may include but are not limited to a physical keyboard, a function button (for example, volume control button or on/off button), a trackball, a mouse, and a joystick. Details are not described herein.

In an embodiment of this application, the radio frequency unit 701 receives downlink data from a network-side device and transfers the data to the processor 710 for processing; and the radio frequency unit 701 can additionally send uplink data to the network-side device. Generally, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may include a first storage area for storing programs or instructions and a second storage area for storing data. The first storage area may store an operating system, an application program or instructions required by at least one function (for example, a sound playback function or an image playback function), and the like. Additionally, the memory 709 may be a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in the embodiments of this application includes but is not be limited to these or any other applicable types of memories.

The processor 710 may include one or more processing units. Optionally, the processor 710 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 710.

The radio frequency unit 701 is configured to acquire first information of a first synchronization signal block SSB from a network-side device and receive the first SSB based on the first information.

The first SSB is a non-cell-defining SSB; and the first information includes at least one of the following: a frequency domain start position, a Subcarrier Spacing SCS, an SSB index, an SSB period, SSB transmission power, and a Physical Cell Identifier PCI.

Optionally, the frequency domain start position is configured based on an absolute frequency domain position or a frequency offset parameter.

Optionally, the frequency domain start position is determined based on a frequency offset reference position, and the frequency offset reference position includes at least one of the following:
a start position of a first bandwidth part BWP, an end position of the first BWP, a start position of a second BWP, an end position of the second BWP, a start position of a second SSB, an end position of the second SSB, a start position of a control resource set with an index of 0, an end position of the control resource set with the index of 0, a start position of a first control resource set, an end position of the first control resource set, a reference point A, a start position of a serving cell, and an end position of the serving cell.

The first control resource set is a control resource set with a smallest index or largest index on the first BWP, the first BWP is at least one of an initial BWP of the terminal and an active BWP of the terminal, the initial BWP is independent of the second BWP, the second BWP contains the second SSB, and the second SSB is a cell-defining SSB.

Optionally, the first control resource set is associated with at least one of the following:
Type 1 common search space CSS;
Type 2 or Type 2A CSS; and
Type 0 or Type 0A CSS.

Optionally, the first information is contained in at least one of the following signaling:
BWP common downlink signaling;
BWP dedicated downlink signaling;
system information block frequency information downlink signaling;
frequency information downlink signaling;
serving cell common configuration signaling; and
serving cell configuration signaling.

Optionally, the first signaling carrying the first information includes at least one of the following:
terminal-specific signaling, cell-specific signaling, and system information.

Optionally, the second information of the first SSB is carried by second signaling, and the second signaling comprises at least one of: system information, a first object, terminal-specific radio resource control RRC signaling, and an RRC connection release message.

The first object is downlink physical layer signaling or Layer 1 signaling.

Optionally, the processor 710 is configured to: determine, in a case that the terminal has received second information carried by the first object and second information carried by a second object, the second information of the first SSB based on the first object and the second object.

The second object includes at least one of the system information, the terminal-specific RRC signaling, and the RRC connection release message.

Optionally, the second information of the first SSB includes at least one of the following:
availability information;
unavailability information;
change information, where the change information indicates changing at least one of the availability information and/or the unavailability information in the second information carried by the second signaling received last time; and
no-change information, where the no-change information indicates not changing at least one of the availability information and the unavailability information in the second information carried by the second signaling received last time.

Optionally, the availability information includes at least one of the following:
the terminal considering or expecting that the network-side device has transmitted the first SSB;
a first duration of availability, where the first duration is used for determining a time length of validity period of the second information; and
a first reference point of availability, where the first duration is used for determining a start time instant of the validity period of the second information.

Optionally, the time length of the validity period of the second information satisfies at least one of the following conditions:
the validity period of the second information is configured by a higher layer;
the validity period of the second information is predefined or preconfigured;
the validity period of the second information is indicated by target indication information; and
an end time instant of the validity period of the second information is dependent on reception of next target indication information by the terminal; where
the target indication information indicates the second information.

Optionally, the start time instant of the validity period of the second information includes one of the following:
a first time instant at which the target indication information is received or at which a next time unit after the target indication information is received starts;
a start time instant of a target SSB period, where the target SSB period is associated with the received target indication information;
a time position configured by a higher layer; and
a first reference point indicated by the target indication information; where
the target indication information indicates the second information.

Optionally, the unavailability information includes at least one of the following:
the terminal not considering or expecting that the network-side device has transmitted the first SSB;
a second duration of unavailability; and
a second reference point of unavailability.

Optionally, the processor 710 is configured to: determine, in a case that no target indication is received by the terminal, whether the first SSB is available or unavailable.

Optionally, the processor 710 is configured to expect, in a case that the terminal is to monitor for a paging or a paging early indication on a first BWP, to receive at least one of the first information of the first SSB and the second information of the first SSB, where the first BWP is at least one of an initial BWP of the terminal and an active BWP of the terminal, the initial BWP is independent of a second BWP, and the second BWP contains a cell-defining SSB.

Optionally, the radio frequency unit 701 is further configured to send a first request to the network-side device based on a first uplink resource, where the first request is used to request the network-side device to send the first SSB on the first BWP, the first BWP is at least one of an initial BWP of the terminal and an active BWP of the terminal, the initial BWP is independent of a second BWP, and the second BWP contains a cell-defining SSB.

Optionally, the first uplink resource includes any one of the following:
a physical random access channel resource, a resource corresponding to message 3, a resource corresponding to message A, and a granted physical uplink shared channel resource that is semi-persistently configured.

Optionally, the response information to the first request includes at least one of the first information and the second information of the first SSB.

An embodiment of this application further provides a network-side device including a processor and a communication interface. The communication interface is configured to send first information of a first synchronization signal block SSB and send the first SSB based on the first information. The first SSB is a non-cell-defining SSB; and the first information includes at least one of the following: a frequency domain start position, a Subcarrier Spacing SCS, an SSB index, an SSB period, SSB transmission power, and a Physical Cell Identifier PCI. This network-side device embodiment corresponds to the foregoing network-side device method embodiment. All processes and implementations in the foregoing method embodiment are applicable to this network-side device embodiment, achieving the same technical effect.

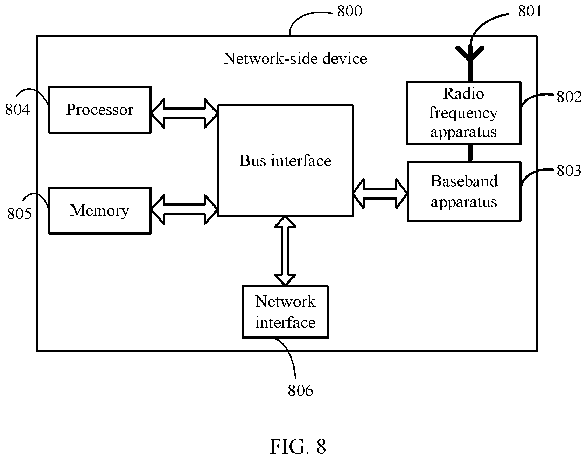

Specifically, an embodiment of this application further provides a network-side device. As shown in FIG. 8, the network-side device 800 includes an antenna 801, a radio frequency apparatus 802, a baseband apparatus 803, a processor 804, and memory 805. The antenna 801 is connected to the radio frequency apparatus 802. Uplink, the radio frequency apparatus 802 receives information through the antenna 801, and sends the received information to the baseband apparatus 803 for processing. Downlink, the baseband apparatus 803 processes to-be-transmitted information, and sends the information to the radio frequency apparatus 802; and the radio frequency apparatus 802 processes the received information and then sends the information out through the antenna 801.

The method executed by the network-side device in the aforesaid embodiments may be implemented on the baseband apparatus 803. The baseband apparatus 803 includes a baseband processor.

The baseband apparatus 803 may include, for example, at least one baseband processing unit, where a plurality of chips are disposed on the baseband processing unit. As shown in FIG. 8, one of the chips is, for example, a baseband processor, and connected to the memory 805 through a bus interface, to invoke the program in the memory 805 to perform the operations of the network device shown in the foregoing method embodiment.

The network-side device further includes a network interface 806, where the interface is, for example, a common public radio interface (Common Public Radio Interface, CPRI).

Specifically, the network-side device 800 in this embodiment of the present invention further includes an instruction or program stored in the memory 805 and executable on the processor 804. The processor 804 invokes the instruction or program in the memory 805 to execute the method executed by the modules shown in FIG. 5, with the same technical effects achieved. To avoid repetition, details are not described herein again.

An embodiment of this application further provides a readable storage medium, where the readable storage medium may be non-volatile or volatile. The readable storage medium stores a program or instructions, and when the program or instructions are executed by a processor, the processes of the foregoing embodiments of the method for receiving a synchronization signal block or the method for transmitting a synchronization signal block are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

Another embodiment of this application provides a chip. The chip includes a processor and a communication interface, the communication interface is coupled to the processor, and the processor is configured to run a program or instructions to implement the processes of the foregoing embodiments of the method for receiving a synchronization signal block or the method for transmitting a synchronization signal block, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a non-transient readable storage medium, and the computer program/program product is executed by at least one processor to implement the processes of the foregoing embodiments of the method for receiving a synchronization signal block or the method for transmitting a synchronization signal block, with the same technical effects achieved. To avoid repetition, details are not described herein again.

An embodiment of this application further provides a communication system including a terminal and a network-side device. The terminal may be configured to execute the foregoing method for receiving a synchronization signal block, and the network-side device may be configured to execute the steps of the foregoing method for transmitting a synchronization signal block.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially, or the part contributing to the prior art may be implemented in the form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to these specific embodiments. The specific embodiments are merely illustrative rather than restrictive. Inspired by this application, persons of ordinary skill in the art may develop many other forms without departing from the principles of this application and the protection scope of the claims, and all such forms fall within the protection scope of this application.

## Claims

1. A method for receiving a synchronization signal block, comprising:
acquiring, by a terminal, first information of a first synchronization signal block SSB from a network-side device; and
receiving, by the terminal, the first SSB based on the first information,
wherein
the first SSB is a non-cell-defining SSB, and the first information comprises at least one of: a frequency domain start position, a Subcarrier Spacing SCS, an SSB index, an SSB period, SSB transmission power, and a Physical Cell Identifier PCI.

2. The method according to claim 1, wherein the frequency domain start position is determined based on a frequency offset reference position, and the frequency offset reference position comprises at least one of:
a start position of a first Bandwidth Part BWP, an end position of the first BWP, a start position of a second BWP, an end position of the second BWP, a start position of a second SSB, an end position of the second SSB, a start position of a control resource set with an index of 0, an end position of the control resource set with the index of 0, a start position of a first control resource set, an end position of the first control resource set, a reference point A, a start position of a serving cell, and an end position of the serving cell,
wherein
the first control resource set is a control resource set with a smallest index or largest index on the first BWP, the first BWP is at least one of an initial BWP of the terminal and an active BWP of the terminal, the initial BWP is independent of the second BWP, the second BWP contains the second SSB, and the second SSB is a cell-defining SSB.

3. The method according to claim 2, wherein the first control resource set is associated with at least one of:
Type 1 Common Search Space CSS;
Type 2 or Type 2A CSS; and
Type 0 or Type 0A CSS.

4. The method according to claim 1, wherein second information of the first SSB is carried by second signaling, and the second signaling comprises at least one of: system information, a first object, terminal-specific Radio Resource Control RRC signaling, and an RRC connection release message, wherein
the first object is downlink physical layer signaling or Layer 1 signaling.

5. The method according to claim 4, further comprising:
determining, by the terminal in a case that the terminal has received second information carried by the first object and second information carried by a second object, the second information of the first SSB based on the first object and the second object, wherein
the second object comprises at least one of the system information, the terminal-specific RRC signaling, and the RRC connection release message.

6. The method according to claim 4, wherein the second information of the first SSB comprises at least one of:
availability information;
unavailability information;
change information, wherein the change information indicates changing at least one of the availability information and/or the unavailability information in the second information carried by the second signaling received last time; and
no-change information, wherein the no-change information indicates not changing at least one of the availability information and/or the unavailability information in the second information carried by the second signaling received last time.

7. The method according to claim 6, wherein the availability information comprises at least one of:
the terminal considering or expecting that the network-side device has transmitted the first SSB;
a first duration of availability, wherein the first duration is used for determining a time length of a validity period of the second information; and
a first reference point of availability, wherein the first duration is used for determining a start time instant of the validity period of the second information.

8. The method according to claim 7, wherein the time length of the validity period of the second information satisfies at least one of the following conditions:
the validity period of the second information is configured by a higher layer;
the validity period of the second information is predefined or preconfigured;
the validity period of the second information is indicated by target indication information; and
an end time instant of the validity period of the second information is dependent on reception of next target indication information by the terminal,
wherein
the target indication information indicates the second information.

9. The method according to claim 8, wherein the start time instant of the validity period of the second information comprises one of:
a first time instant at which the target indication information is received or at which a next time unit after the target indication information is received starts;
a start time instant of a target SSB period, wherein the target SSB period is associated with the received target indication information;
a time position configured by a higher layer; and
a first reference point indicated by the target indication information,
wherein
the target indication information indicates the second information.

10. The method according to claim 6, wherein the unavailability information comprises at least one of:
the terminal not considering or expecting that the network-side device has transmitted the first SSB;
a second duration of unavailability; and
a second reference point of unavailability.

11. The method according to any one of claims 1 to 10, further comprising, subsequent to receiving, by the terminal, the first SSB based on the first information:
determining, by the terminal in a case that no target indication is received by the terminal, whether the first SSB is available or unavailable.

12. The method according to any one of claims 1 to 10, wherein the frequency domain start position is configured based on an absolute frequency domain position or a frequency offset parameter.

13. The method according to any one of claims 1 to 10, wherein the first information is contained in at least one of:
BWP common downlink signaling;
BWP dedicated downlink signaling;
system information block frequency information downlink signaling;
frequency information downlink signaling;
serving cell common configuration signaling; and
serving cell configuration signaling.

14. The method according to any one of claims 1 to 10, wherein first signaling carrying the first information comprises at least one of:
terminal-specific signaling, cell-specific signaling, and system information.

15. The method according to any one of claims 1 to 10, further comprising:
expecting, by the terminal in a case that the terminal is to monitor for a paging or a paging early indication on a first BWP, to receive at least one of the first information of the first SSB and the second information of the first SSB, wherein the first BWP is at least one of an initial BWP of the terminal and an active BWP of the terminal, the initial BWP is independent of a second BWP, and the second BWP contains a cell-defining SSB.

16. The method according to any one of claims 1 to 10, further comprising:
transmitting, by the terminal, a first request to the network-side device based on a first uplink resource, wherein the first request is used to request the network-side device to transmit the first SSB on a first BWP, the first BWP is at least one of an initial BWP of the terminal and an active BWP of the terminal, the initial BWP is independent of a second BWP, and the second BWP is contains a cell-defining SSB.

17. The method according to claim 16, wherein the first uplink resource comprises any one of:
a physical random access channel resource, a resource corresponding to message 3, a resource corresponding to message A, and a granted physical uplink shared channel resource that is semi-persistently configured.

18. The method according to claim 16, wherein response information to the first request comprises at least one of the first information and the second information of the first SSB.

19. A method for transmitting a synchronization signal block, comprising:
transmitting, by a network-side device, first information of a first synchronization signal block SSB; and
transmitting, by the network-side device, the first SSB based on the first information,
wherein
the first SSB is a non-cell-defining SSB, and the first information comprises at least one of: a frequency domain start position, a Subcarrier Spacing SCS, an SSB index, an SSB period, SSB transmission power, and a Physical Cell Identifier PCI.

20. The method according to claim 19, wherein the frequency domain start position is determined based on a frequency offset reference position, and the frequency offset reference position comprises at least one of:
a start position of a first Bandwidth Part BWP, an end position of the first BWP, a start position of a second BWP, an end position of the second BWP, a start position of a second SSB, an end position of the second SSB, a start position of a control resource set with an index of 0, an end position of the control resource set with the index of 0, a start position of a first control resource set, an end position of the first control resource set, a reference point A, a start position of a serving cell, and an end position of the serving cell,
wherein
the first control resource set is a control resource set with a smallest index or largest index on the first BWP, the first BWP is at least one of an initial BWP of the terminal and an active BWP of the terminal, the initial BWP is independent of the second BWP, the second BWP contains the second SSB, and the second SSB is a cell-defining SSB.

21. The method according to claim 20, wherein the first control resource set is associated with at least one of:
Type 1 Common Search Space CSS;
Type 2 or Type 2A CSS; and
Type 0 or Type 0A CSS.

22. The method according to any one of claims 19 to 21, wherein second information of the first SSB is carried by second signaling, and the second signaling comprises at least one of: system information, a first object, terminal-specific Radio Resource Control RRC signaling, and an RRC connection release message,
wherein
the first object is downlink physical layer signaling or Layer 1 signaling.

23. The method according to claim 22, wherein the second information of the first SSB comprises at least one of:
availability information;
unavailability information;
change information, wherein the change information indicates changing at least one of the availability information and/or the unavailability information in the second information carried by the second signaling received last time; and
no-change information, wherein the no-change information indicates not changing at least one of the availability information and/or the unavailability information in the second information carried by the second signaling received last time.

24. The method according to claim 23, wherein the availability information comprises at least one of:
the terminal considering or expecting that the network-side device has transmitted the first SSB;
a first duration of availability for determining a time length of a validity period of the second information; and
a first reference point of availability, wherein the first duration is used for determining a start time instant of the validity period of the second information.

25. The method according to claim 24, wherein the time length of the validity period of the second information satisfies at least one of the following conditions:
the validity period of the second information is configured by a higher layer;
the validity period of the second information is predefined or preconfigured;
the validity period of the second information is indicated by target indication information; and
an end time instant of the validity period of the second information is dependent on reception of next target indication information by the terminal,
wherein
the target indication information indicates the second information.

26. The method according to claim 25, wherein the start time instant of the validity period of the second information comprises one of:
a first time instant at which the target indication information is received or at which a next time unit after the target indication information is received starts;
a start time instant of a target SSB period, wherein the target SSB period is associated with the received target indication information;
a time position configured by a higher layer; and
a first reference point indicated by the target indication information,
wherein
the target indication information indicates the second information.

27. The method according to claim 23, wherein the unavailability information comprises at least one of:
the terminal not assuming or expecting that the network-side device has transmitted the first SSB;
a second duration of unavailability; and
a second reference point of unavailability.

28. An apparatus for receiving a synchronization signal block, comprising:
a first receiving module, configured to acquire first information of a first synchronization signal block SSB from a network-side device and receive the first SSB based on the first information, wherein
the first SSB is a non-cell-defining SSB, and the first information comprises at least one of: a frequency domain start position, a Subcarrier Spacing SCS, an SSB index, an SSB period, an SSB transmission power, and a Physical Cell Identifier PCI.

29. An apparatus for transmitting a synchronization signal block, comprising:
a first transmitting module, configured to transmit first information of a first synchronization signal block SSB and transmit the first SSB based on the first information,
wherein
the first SSB is a non-cell-defining SSB, and the first information comprises at least one of: a frequency domain start position, a Subcarrier Spacing SCS, an SSB index, an SSB period, SSB transmission power, and a Physical Cell Identifier PCI.

30. A terminal, comprising a processor and a memory, wherein the memory stores a program or instructions executable on the processor, and the processor is configured to, when executing the program or instructions, perform steps of the method for receiving a synchronization signal block according to any one of claims 1 to 18.

31. A network-side device, comprising a processor and a memory, wherein the memory stores a program or instructions executable on the processor, and the processor is configured to, when executing the program or instructions, perform steps of the method for transmitting a synchronization signal block according to any one of claims 19 to 27.

32. A readable storage medium, wherein the readable storage medium stores a program or instructions, and the program or instructions, when executed by a processor, implement steps of the method for receiving a synchronization signal block according to any one of claims 1 to 18, or steps of the method for transmitting a synchronization signal block according to any one of claims 19 to 27.
